Europäisches Patentamt

**European Patent Office**

**Office européen des brevets**

(19)

(11) Publication number: **0 089 935**

**A1**

(12)

# EUROPEAN PATENT APPLICATION

(21) Application number: **83850057.7**

(22) Date of filing: **10.03.83**

(51) Int. Cl.³: **B 65 C 9/36**
**B 65 H 3/36, B 65 H 5/10**
**F 16 H 21/10**

(30) Priority: **15.03.82 SE 8201602**

(43) Date of publication of application:
**28.09.83 Bulletin 83/39**

(84) Designated Contracting States:
**BE DE FR GB IT NL**

(71) Applicant: **Propoflex, Ulf Tönnesen**
**Datavägen 55**
**S-436 00 Askim(SE)**

(72) Inventor: **Tönnesen, Ulf**
**Kobbegarden 44**
**S-436 00 Askim(SE)**

(74) Representative: **Graudums, Valdis et al,**
**Backers Patentbyra AB Drottninggatan 15**
**S-441 14 Göteborg(SE)**

(54) **A label applying device.**

(57) An applicator, preferably for in-line labelling of objects transported by a conveyor system.

The applicator comprises a head (13) for movement from and to a position for fetching a label.

The applicator head is supported in a pendulum arm system (11, 12) allowing composite swinging movement in a plane oriented in the transport direction and perpendicular to the transport plane. A first swinging motion is possible in the transport direction and a second swinging motion in a direction perpendicular thereto.

The system allows object size related height positioning.

FIG. 3

EP 0 089 935 A1

TITLE MODIFIED P 6912/VG/sp
.03.1983
see front page

AN APPLICATOR DEVICE.

The present invention relates to an applicator, preferably for in-line labelling of objects transported by a
conveyor system.

Modern handling of goods, for instance in packing
lines, necessitates components and sub systems of high
performance type in the handling system. Frequently, it is
called for an easy adjustment to various package sizes, an
easy but reliable operation, an easy maintenance, etc. Of
course, at the same time it is called for a reasonable
cost.

An essential unit of the goods handling system
frequently is some kind of marking device which by applying
a label provides the goods, the packages, etc. with visual
and/or machine readable information related to contents,
weight, price, etc.

There is a great variety of label applicator devices,
but to-day there is lacking at an optimum simple and reliable device that allows in-line labelling of objects of
various sizes.

In order to obviate said lack the present invention
suggests an applicator of the actual type which is charac-
terized by a device that supports an applicator head for
movement from and to a position for fetching a second
object, for instance a label, said device being such that
it provides an applicator head movement comprising a component of movement in the transport direction of the objects
as well as in the opposite direction, and allows an automatic object related hight positioning of the head above
the actual transport plane.

For this object the applicator preferably is supported
in a pendulum arm which allows swinging movement in a plane
oriented in the transport direction and generally perpendicular to the transport plane, in a direction generally perpendicular to the transport direction as well as in the
transport direction.

Preferably, the applicator head by two arms pivoted in a joint is supported for swinging movement around a fixed point of suspension of the pendulum arm system.

The driving of the pendulum arm system suitably is accomplished by a crank web pivoted in the arm between the applicator head and said joint and fixedly mounted to a rotatable disc.

In order to accomplish the automatic hight positioning, the movement of the crank web is arranged to follow automatically the height positioning of the applicator head.

The applicator head hight positioning related adjustment of the crank web is realized by arranging the rotatable disc displaceable, preferably "pendulum displaceable" with a vertical component of movement.

The vertical pendulum displacement of the disc is accomplished by a slewing bracket connecting the disc to a fixed joint.

Via the crank web and the arm pivoted thereto, the slewing bracket preferably maintains the applicator head in a position corresponding to a minimum height of the objects via biasing means, for instance a tension spring, positively acting on the slewing bracket.

In said position the rotatable disc suitably is maintained positively in its lowest vertical position, for instance by abutment against a stop of the end of the slewing bracket journalled in the disc.

The rotatable disc preferably is driven via a transmission from a driving device which gives the applicator a motion in synchronism with the objects, for instance by a sensor controlling the driving device in terms of the speed of the conveyor.

The relation between the lenghts of the lever arms and the position of the joint/joints is such that the applicator head is given a horisontal movement of sufficient lenght for the actual purpose; the path of movement might broadly conform to an ellipse having a horisontal major axis.

The means for driving of the applicator suitably also accomplish a movement such that the movement of the applicator head to and from the fetching position will be timed
relative the other object in said position such that said
other object already is located in the fetching position
when the applicator arrives.

The invention will now be exemplified and elucidated
further in the following description with reference to the
accompanying drawings, where

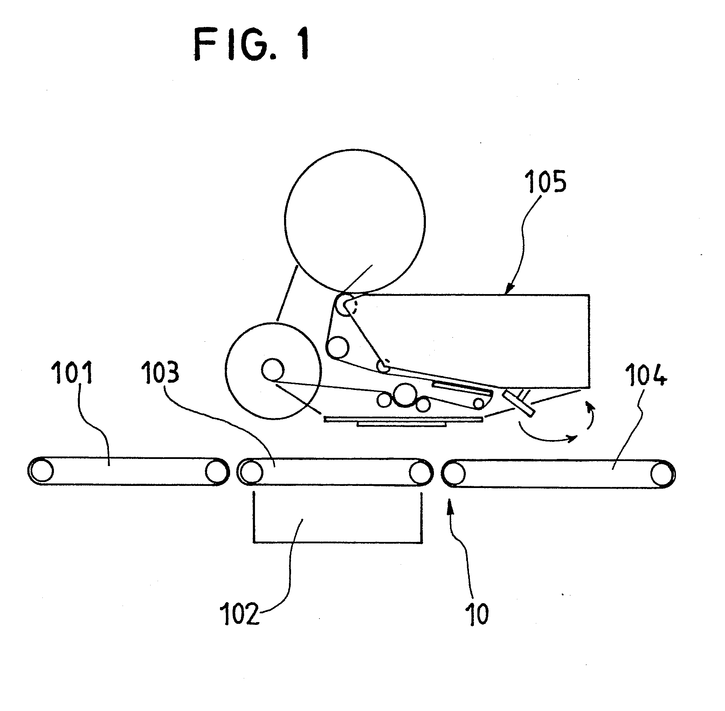

Figure 1 schematically shows part of a line where the applicator according to the invention is included,

Figure 2 shows the basic diagram of movement of the applicator, and

Figure 3 shows a practical embodiment of the elements for
          accomplishing the movement.

The reference numeral 10 generally denotes a conveyor
system comprising an input conveyor 101 to a weighing
machine 102 provided with a weighing conveyor 103 and an
output conveyor 104.

In a position above the conveyor system 10, which in
the present case is oriented horisontally, there is a label
printing and label output device 105.

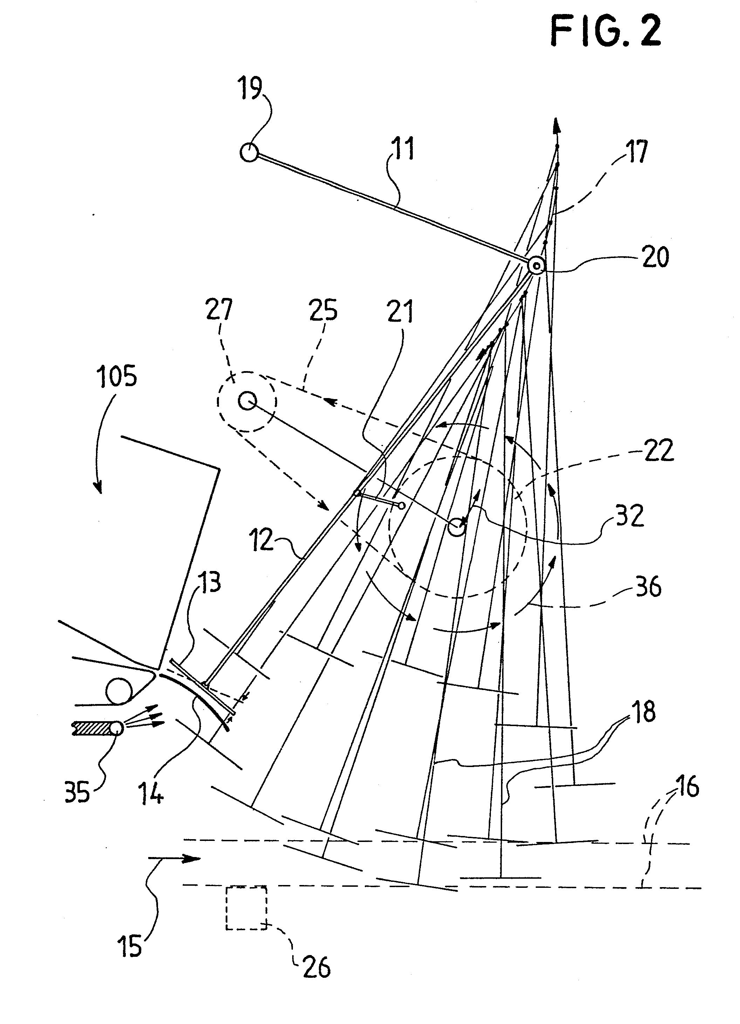

In Figure 2 it is shown how a label 14 is located in an
output position corresponding to the fetching position of
an applicator head 13. The applicator head is supported in
a pendulum arm system 11, 12 which allows a composite
swinging movement 17, 18 in a plane generally perpendicular
to the transport plane 16, along which the parcels, packages 26 are forwarded horisontally in the direction of the
arrow 15. The plane of the swinging movement is oriented in
the transport direction 15, and a first swinging movement
17 is possible along the arc that has been indicated, while
a second swinging movment is indicated by the positions 18
of the applicator(head).

The pendulum system is arranged such that there is a
fixed fulcrum 19 and a movable joint 20 between the two
pendulum arms 11, 12.  A disc (for instance a cog belt
wheel) 22 has a crank web 21 fixed thereto. The crank web
is journalled in the arm 12. The disc is rotatable by a
transmission 25 driven by a driving motor.

The applicator head describes the swinging movement 18 under the action from the crank web 21 (the end of which moves along the broken circle periphery 36) and the movable joint 20 gives the swinging movement 17. The reference numeral 32 indicates that the disc 22 is displaceable with a component of movement in the vertical direction. Said displacement is "automatic" and is obtained positively by the contact of the applicator head with a parcel, package, etc.

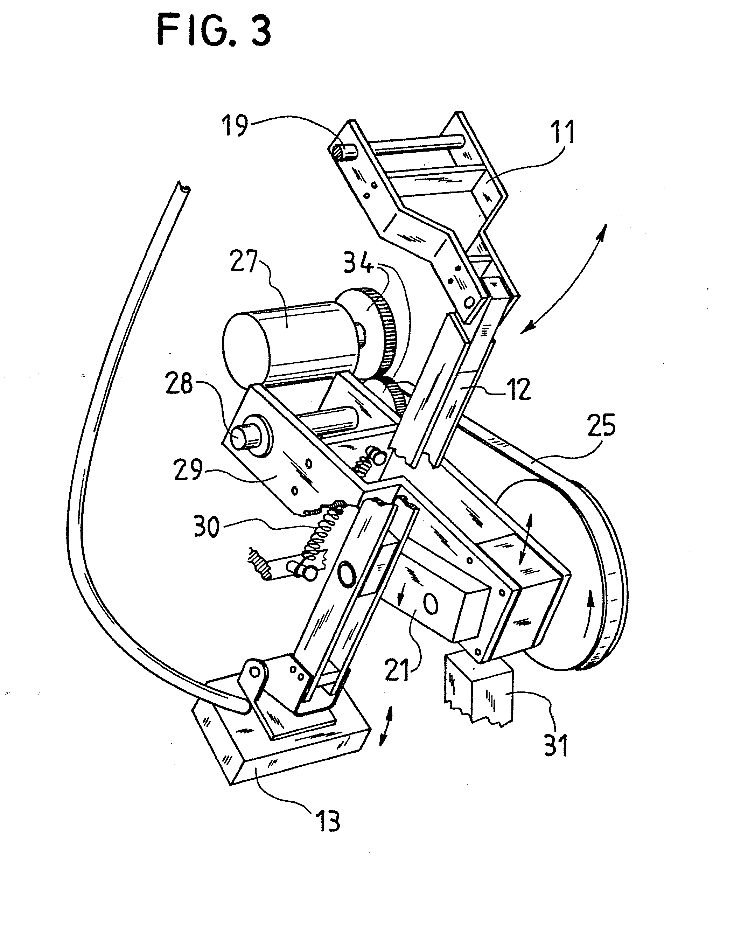

A more complete and practical embodiment of the suspension system of the applicator head appears from Figure 3. The pendulum arm 11 is here a fork arm journalled in the horizontal shaft 19. The fixed attachment of the crank web 21 to the disc (cog belt wheel) 22 is accomplished through a further fork arm or slewing bracket 29 journalled onto a fixed horisontal shaft 28. The pendulum arm 12 is located between the two arms of the fork 29.

In the embodiment disclosed, the disc 22 is a cog belt disc driven by a cog belt 25 from a motor 27 via a transmission gear 34.

The fork arm 29 is kept in a starting position (bottom position) by a spring 30 and in this position the arm 29 abuts a stop 31. As an alternative to a tension spring vacuum assistance might be possible.

The length of the horisontal phase of movement is selected by a feasible relation between the length of the pendulum arms and the location of the joints.

The driving speed of the motor 27 is adjusted automatically to the speed of the output conveyor, for instance by a sensor (not shown) that senses the conveyor speed and controls the speed of the motor in relation thereto such that the speed of the applicator head coincides with the conveyor speed.

Preferably, the label 13 is lifted against the applicator by the blower ortpiece 35. The timing of the supply of labels is such that a label 13 already might be in the fetching position when the return stroke of the applicator head 13 is terminated. This gives the system a high capacity potential without extreme mechanical speeds.

0089935

P 6912/VG/Ah

.03.1982

CLAIMS

1. An applicator, preferably for in-line labelling of object of varying sizes transported by a conveyor system (10), c h a r a c t e r i z e d by a device (11, 12) for supporting an applicator head (13) for movement from and back to a position for fetching a second object, for instance a label (14), said device being arranged for giving the applicator head a movement with component of movement in the transport direction (15) of the applicator as well as in the opposite direction and being such that it allows automatic object size related height positioning of the head (13) above the transport plane (16).

2. An applicator according to claim 1, c h a r a c - t e r i z e d in that the applicator head (13) is supported in a pendulum system (11, 12) which allows composite swinging movement (17, 18) in a plane oriented in the transport direction and generally perpendicular to the transport plane, in a direction generally perpendicular to the transport direction (15) as well as in the transport direction.

3. An applicator according to claim 2, c h a r a c - t e r i z e d in that the applicator head (13) is supported for swinging movement around a fixed point of suspension (19) of the pendulum arm system by two arms (11, 12) journalled in a joint (20).

4. An applicator according to claim 3, c h a r a c - t e r i z e d in that the pendulum arm system is drivable by a crank web (21) journalled in the arm (12) between the applicator head and said joint and fixedly attached to a rotatable disc (22).

5. An applicator according to claim 4, c h a r a c - t e r i z e d in that the movement of the crank web (21) is arranged to follow automatically the height positioning of the applicator head (13).

6 0089935

6. An applicator according to claim 5, c h a r a c - t e r i z e d in that the applicator head (13) height positioning related adjustment of the crank web is accomplished by displacement with vertical component of movement of the rotatable disc (22).

7. An applicator according to claim 5, c h a r a c - t e r i z e d in that the vertical displacement of the disc is accomplished by a slewing bracket (29) connecting the disc (22) to a fixed fulcrum (28).

8. An applicator according to claim 7, c h a r a c - t e r i z e d in that the slewing bracket (29) via the crank web (21) and the arm (12) journalled therein maintains the applicator head (13) in a position corresponding to a minimum height of the objects via a biasing means, for instance a tension spring (30), acting positively on the slewing bracket (29).

9. An applicator according to claim 8, c h a r a c - t e r i z e d in that in said position the rotatable disc (22) positively is maintained in the lowest vertical position thereof, for instance by the action of a stop (31) abutting against the end of the slewing bracket journalled in the disc.

10. An applicator according to anyone or any of claims 4 to 9, c h a r a c t e r i z e d in that the rotatable disc (22) is driven via a transmission (25) from a driving device (27) which gives the applicator (13) a movement in synchronism relative the objects (26), for instance by a sensor that controls the driving device as a function of the conveyor speed.

11. An applicator according to anyone or any of the preceeding claims, c h a r a c t e r i z e d in that the means (11, 12, 25, 27) for driving of the applicator also accomplishes such movement thereof that the movement of the applicator to and from the fetching position is so timed relative the second object in said position, for instance a label, that said second object (14) possibly already is in the fetching position when the applicator arrives.

# FIG. 1

# FIG. 2

0089935

# FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 172 753  (BENOIT)<br>* Column  4, line 14 - column 5, line 41; figures 1,6 * | 1 | B 65 C    9/36<br>B 65 H    3/36<br>B 65 H    5/10<br>F 16 H   21/10 |
| Y | | 2 | |
| Y | US-A-4 293 365  (ZELLERBACH)<br>* Column  2, line 16 - column 4, line 38; figures 1-9 * | 2,3,4 | |
| Y | DE-C-  494 804  (ROHRBACHER)<br>* Page 2, lines 38-53; figure 2 * | 3,4 | |

TECHNICAL FIELDS
SEARCHED (Int. Cl. ³)

B 65 C
B 65 H
F 16 H
B 65 G

The present search report has been drawn up for all claims

| Place of search<br>THE HAGUE | Date of completion of the search<br>21-06-1983 | Examiner<br>VROMMAN L.E.S. |
|---|---|---|